# EUROPEAN PATENT APPLICATION

(11) **EP 2 870 864 A1**
(43) Date of publication of application: **13.05.2015**
(21) Application number: 13843520.1
(22) Date of filing: 02.07.2013
(51) Int. Cl.: A01G 31/02, A01G 9/08, A01G 31/00

(54) **PLANT PROPAGATION DEVICE AND CULTURING PANEL**

(30) Priority: 04.10.2012 JP 2012221948
(71) Applicant: Tsubakimoto Chain Co., Osaka 530-0005 (JP)
(72) Inventor: HIRAI, Tatsuya, Osaka-shi Osaka 530-0005 (JP); KOUNO, Kouji, Osaka-shi Osaka 530-0005 (JP); OKAZAKI, Yu, Osaka-shi Osaka 530-0005 (JP); OHARA, Hitoshi, Osaka-shi Osaka 530-0005 (JP)
(74) Representative: Von Kreisler Selting Werner - Partnerschaft von Patentanwälten und Rechtsanwälten mbB
(86) International application number: PCT/JP2013/068149
(87) International publication number: WO 2014/054322

(57) **Abstract**

There is provided a plant transplantation device capable of reliably sucking a root of a plant into a hole portion, reliably causing the root of the plant to extend downward from the hole portion without remaining in the hole portion, and improving production efficiency without requiring monitoring or manual operations with a simple configuration. The plant transplantation device includes a suctioning means 110 for sucking a root 103 of a plant 101 and causing the root 103 of the plant 101 to pass through a hole portion 121, the suctioning means 110 has a suctioning tube 111 which can be hermetically attached to a lower portion of the hole portion 121 and a suction pipe 112 which causes a negative pressure in the suctioning tube 111, and a water supplying means 130 for supplying water to the root 103 of the plant 101 is provided in the vicinity of the hole portion 121.

## Description

### TECHNICAL FIELD

The present invention relates to a plant transplantation device having a suctioning means for sucking a root of a plant and causing the root of the plant to pass through a hole portion and a culturing panel, and relates to a plant transplantation device which transplants the plant into holding holes of different culturing panels in accordance with the growth of the plant and the culturing panel in, e.g., a hydroponic culture facility such as a plant factory or the like.

### BACKGROUND ART

Conventionally, hydroponic culture facilities which hold a plant in a holding member such as, e.g., a culturing panel having a plurality of holding holes, and soak the root of the plant growing downward from the holding hole of the culturing panel in a culturing liquid or sprinkle the culturing liquid on the root in a plant factory or the like is well known.

In these hydroponic culture facilities, in the case where a plant which grows so as to spread widely in a horizontal direction is held in a holding panel and is cultured, space efficiency is reduced when a single culturing panel having holding holes formed at intervals determined on the assumption of the shape of the grown plant is used, and entire production efficiency is deteriorated.

To cope with this, the plant is transplanted into the culturing panels having different intervals between the holding holes in accordance with the growth of the plant, and it is desirable to perform this transplantation operation frequently in accordance with the growth in terms of the space efficiency.

In addition, in the plant factory or the like, it is necessary to avoid the deterioration of the entire production efficiency caused by the transplantation operation, and hence a culture facility in which the transplantation operation for transplanting the plant into the culturing panels having different intervals between the holding holes is automated using a transplantation device is proposed (see, e.g., Patent Document 1 and the like).

On the other hand, the length, thickness, and quantity of the root of the plant increase with the growth of the plant, and the increase varies from plant to plant so that there is a possibility that a part or all of the root cannot be inserted into a hole portion or remains in the hole portion when the plant is transplanted into the hole portion, and there have been cases where the plant cannot be transplanted into the hole portion or a part or all of the root does not extend downward from the hole portion even when the plant can be transplanted into the hole portion.

It is not possible to continue the subsequent culture of the plant which cannot be transplanted into the hole portion and, in the state in which a part or all of the root does not extend downward from the hole portion, it is not possible to supply the sufficient amount of the culturing liquid to the root so that the growth of the plant is inhibited and the plant dies in the worst case.

Consequently, in order to prevent these ill effects, it is necessary to monitor the state of the transplantation and the state of the root and perform manual operations by an operator in the case where the above states are incomplete, which has hindered the improvement of the entire production efficiency.

A transplantation device which uses a suctioning means for sucking the root of the plant and causing the root thereof to pass through the hole portion such that the transplantation is performed normally and the root of the plant extends downward from the hole portion in order to alleviate the above problem is well known (see Patent Document 2 or the like).

### Citation List

### Patent Literature

Patent Document 1: Japanese Patent Application Laid-open No. H7-147857
Patent Document 2: Japanese Patent Application Laid-open No. 2000-166408

### DISCLOSURE OF THE INVENTION

### Problems to be Solved by the Invention

However, the well-known transplantation device having the suctioning means disclosed in Patent Document 1 has had a problem that, in the case where a part or all of the root of the plant is not inserted into the hole portion and stays around the upper portion of the hole portion, it is not possible to suck the root sufficiently and the root remains in the hole portion without extending downward from the hole portion.

In addition, in the case where the quantity or the spread of the root inserted into the hole portion is large and the root is pushed against the inner surface of the hole portion, there has been a possibility that a part or all of the root remains in the hole portion due to friction with the inner surface of the hole portion and cannot be caused to extend downward from the hole portion.

In order to solve these problems, it is conceivable to increase the suction force, but many of the roots of the plant are intertwined with each other sparsely, and hence there has been a possibility that only the amount of sucked air is increased, the force of sucking the root is not increased sufficiently, the plant itself (or a culturing pot which holds the plant) is strongly sucked into the hole portion, and the plant is damaged.

The present invention solves these problems, and an object thereof is to provide a plant transplantation device and a culturing panel capable of reliably sucking the root of the plant into the hole portion, reliably causing the root of the plant to extend downward from the hole portion without remaining in the hole portion, and improving the production efficiency without requiring monitoring or manual operations for the insertion of the root with a simple configuration.

### Means for Solving the Problems

A first aspect of the present invention is a plant transplantation device including a suctioning means for sucking a root of a plant and causing the root of the plant to pass through a hole portion, wherein the suctioning means has a suctioning tube which can be hermetically attached to a lower portion of the hole portion and a suction pipe which causes a negative pressure in the suctioning tube, and a water supplying means for supplying water to the root of the plant is provided in a vicinity of the hole portion, whereby the above problems are solved.

In a second aspect of present invention, in addition to the configuration of the plant transplantation device according to the first aspect, the water supplying means is configured to supply water from the suctioning tube to the hole portion via a water supply pipe, whereby the above problems are solved.

In a third aspect of the present invention, in addition to the configuration of the plant transplantation device according to the first or second aspect, the water supplying means has a water discharge nozzle which supplies water to the hole portion from above, whereby the above problems are solved.

In a fourth aspect of the present invention, in addition to the configuration of the plant transplantation device according to any one of the first to third aspects, a plurality of suctioning tubes are provided in correspondence to a plurality of hole portions, and a plurality of water supplying means are provided in correspondence to the plurality of the suctioning tubes, whereby the above problems are solved.

A fifth aspect of the present invention is a culturing panel in which a plurality of holding holes vertically passing through the culturing panel are provided and the plant transplantation device according to any one of the first to fourth aspects is used, with each of the holding holes being used as a hole portion, wherein a storage portion which stores water is formed on an upper surface side of the holding hole, whereby the above problems are solved.

In a sixth aspect of the present invention, in addition to the configuration of the culturing panel according to the fifth aspect, the storage portion is formed in use of a funnel-shaped portion formed in a peripheral edge portion on the upper surface side of the holding hole, whereby the above problems are solved.

In a seventh aspect of the present invention, in addition to the configuration of the culturing panel according to the fifth or sixth aspect, the storage portion is formed in use of at least one inclined groove formed so as to be coupled to the peripheral edge portion of the holding hole on the upper surface side of the holding hole and extend to an outer peripheral side, whereby the above problems are solved.

In an eighth aspect of the present invention, in addition to the configuration of the culturing panel according to any one of the fifth to seventh aspects, the storage portion is formed in use of a water storage wall provided so as to stand on the outer peripheral side of the peripheral edge portion on the upper surface side of the holding hole and have a diameter larger than that of the peripheral edge portion of the holding hole, whereby the above problems are solved.

### Beneficial Effects of the Invention

According to the plant transplantation device according to the first aspect, the water supplying means for supplying water to the root of the plant is provided in the vicinity of the hole portion, whereby it is possible to fill the inside of the hole portion and gaps between sparsely intertwined roots with water, and hence, by causing the negative pressure in the suctioning tube hermetically attached to the lower portion of the hole portion, the water in the inside of the hole portion and the gaps between the sparsely intertwined roots and the roots are simultaneously sucked toward the lower portion of the hole portion.

The root has high water wettability and surface tension is present in water itself, and hence the roots between which the gaps are filled with supplied water are reliably sucked toward the suctioning tube together with water in the inside of the hole portion without remaining in the hole portion.

Further, the root which spreads around the upper portion of the hole potion and is not inserted into the hole portion can be reliably sucked into the hole portion with the viscosity and the surface tension of water, all of the roots of the plant can be reliably caused to extend downward from the hole portion, and it becomes possible to improve production efficiency without requiring monitoring or manual operations.

According to the configuration of the second aspect, it is only necessary to add the water supply pipe to the suctioning tube on the lower side and it is not necessary to add a structural member on the hole portion side, and hence the configuration is simplified, the interference with other structural members for a transplantation operation of the plant seldom occurs, and flexibility in the design of the entire transplantation facility is not spoiled.

In addition, one pipe can be shared by the suction pipe and the water supply pipe in the vicinity of the suctioning tube, and hence the configuration can be further simplified.

According to the configuration of the third aspect, it is possible to sufficiently supply water to the root which spreads around the upper portion of the hole portion and is not inserted into the hole portion, and it is possible to gather the root in the direction of the hole portion using the flow of water supplied from the water discharge nozzle, and hence it is possible to further reliably cause all of the root of the plant to extend downward from the hole portion.

According to the configuration of the fourth aspect, for example, in the transplantation operation which uses the culturing panel having a plurality of the holding holes, it becomes possible to suck the roots of a plurality of the plants into the plurality of the hole portions and cause the roots thereof to pass through the plurality of the hole portions, and hence the efficiency of the transplantation operation is improved, and the production efficiency is further improved.

According to the culturing panel according to the fifth aspect, in addition to the inside of the holding hole as the hole portion, the storage portion provided on the upper surface side is also filled with water when the plant transplantation device according to any one of the first to fourth aspects is used, and hence the amount of water with which the root of the plant to be transplanted comes in contact is increased, and it is possible to reliably cause all of the root of the plant to extend downward from the holding hole.

In addition, it is possible to set the hole portion such that the area on the upper surface side of the hole portion is increased by using the storage portion, and hence it becomes easy to avoid a state in which a part or all of the root is not inserted into the holding hole when the plant is transplanted from above.

Further, even in the case where a part or all of the root is not inserted into the holding hole, the root is sucked by the storage portion, whereby the root is easily sucked into the holding hole and it becomes possible to cause the root which is not inserted to pass through the holding hole.

According to the configuration of the sixth aspect, with the formation of the storage portion into the funnel shape, it becomes possible to suck the root more smoothly.

In addition, also when the plant is transplanted from above, it becomes possible to smoothly insert the root into the holding hole with the inclined surface of the funnel shape.

According to the configuration of the seventh aspect, in the case where the transplantation operation is automated and the plant is transplanted while being moved horizontally, even when the root is dragged or swung by the horizontal movement, it becomes possible to appropriately design in accordance with a length and an orientation corresponding to the direction, and it becomes easier to avoid the state in which a part of all of the root is not inserted into the holding hole.

According to the configuration of the eighth aspect, it is possible to further increase the capacity and the upper area of the storage portion, and it becomes possible to vertically extend space filled with water, and hence it becomes easier to avoid the state in which a part or all of the root is not inserted into the holding hole. In addition, even in the case where a part of all of the root is not inserted into the holding hole, it becomes possible to suck the root into the holding hole more easily and cause the root which is not inserted to pass through the holding hole.

### BRIEF DESCRIPTION OF THE DRAWINGS

FIG. 1 is a schematic explanatory view of a plant and a hole portion used in the present invention;
FIG. 2 is a schematic explanatory view of a plant transplantation device according to a first embodiment of the present invention;
FIG. 3 is a schematic explanatory view of a plant transplantation device according to a second embodiment of the present invention;
FIG. 4 is a schematic explanatory view of a plant transplantation device and a culturing panel according to a third embodiment of the present invention;
FIG. 5 is a cross-sectional view for explaining the shape of a culturing panel according to a fourth embodiment of the present invention;
FIG. 6 (a) is a plan view for explaining the shape of a culturing panel according to a fifth embodiment of the present invention, and FIG. 6(b) is a cross-sectional view for explaining the shape thereof; and
FIG. 7 (a) is a plan view for explaining the shape of a culturing panel according to a sixth embodiment of the present invention, and FIG. 7(b) is a cross-sectional view for explaining the shape thereof.

### EXPLANATION OF REFERENCE NUMERALS

101 ... plant
102 ... culturing pot
103 ... root
110 ... suctioning means
111 ... suctioning tube
112 ... suction pipe
113 ... valve
120 ... culturing panel
121 ... holding hole (hole portion)
122 ... peripheral edge portion (upper)
123 ... peripheral edge portion (lower)
124 ... funnel portion
125 ... inclined groove
126 ... water storage wall
127 ... storage portion
130 ... water supplying means
131 ... water supply pipe
132 ... valve
133 ... water discharge nozzle

### BEST MODE FOR CARRYING OUT THE INVENTION

As long as a plant transplantation device of the present invention is a plant transplantation device including a suctioning means for sucking a root of a plant and causing the root of the plant to pass through a hole portion wherein the suctioning means has a suctioning tube which can be hermetically attached to a lower portion of the hole portion and a suction pipe which causes a negative pressure in the suctioning tube, and a water supplying means for supplying water to the root of the plant is provided in a vicinity of the hole portion, and the plant transplantation device is capable of reliably sucking the root of the plant into the hole portion, reliably causing the root of the plant to extend downward from the hole portion without remaining in the hole potion, and improving production efficiency without requiring monitoring or manual operations for the insertion of the root with a simple configuration, its specific configuration may be any configuration.

The grip and movement of the plant may be automated as in the well-known technique described above, or may also be manually performed by an operator.

As long as a culturing panel of the present invention is a culturing panel in which a plurality of holding holes vertically passing through the culturing panel are provided and the plant transplantation device according to any one of claims 1 to 4 is used with each of the holding holes used as a hole portion wherein a storage portion which stores water is formed on an upper surface side of the holding hole, and the culturing panel is capable of reliably sucking the root of the plant into the hole portion, reliably causing the root of the plant to extend downward from the hole portion without remaining in the hole potion, and improving production efficiency without requiring monitoring or manual operations for the insertion of the root with a simple configuration, its specific configuration may be any configuration.

Note that all of the drawings used in the following description are simplified, and do not represent actual arrangements, shapes, and dimension ratios.

First, the plant handled in the plant transplantation device and the culturing panel of the present invention and the outline of the hole portion into which the plant is inserted will be described.

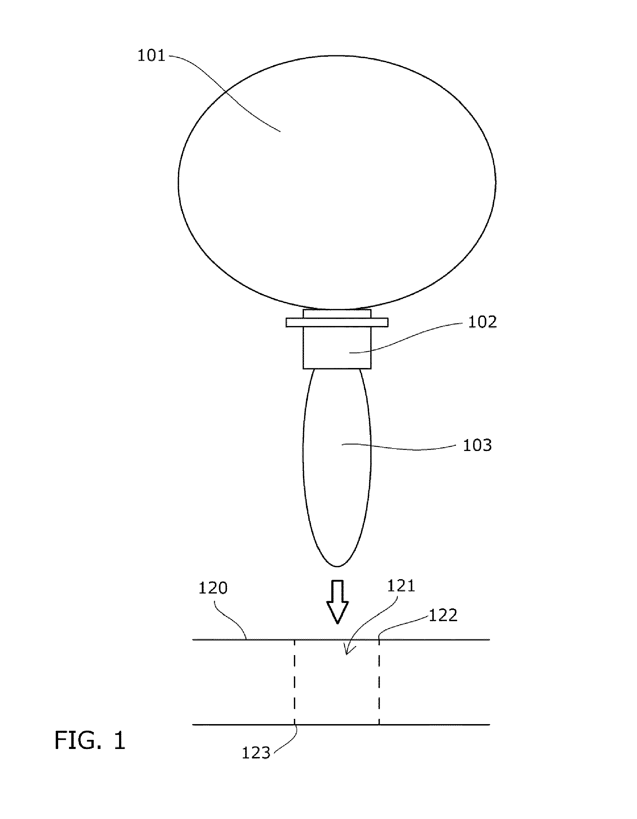

As shown in FIG. 1, a plant 101 is cultured in a culturing pot 102 on a per-root basis, and a stem and a leaf grow into space above the culturing pot 102 and a root (including an underground stem) grows into space below the culturing pot 102.

The culturing pot 102 is inserted into and held in a holding hole 121 provided in a culturing panel 120, and the culture of the plant 101 is performed in various culture facilities such as a plant factory and the like while the culturing pot 102 is handled on a per-culturing panel 120 basis.

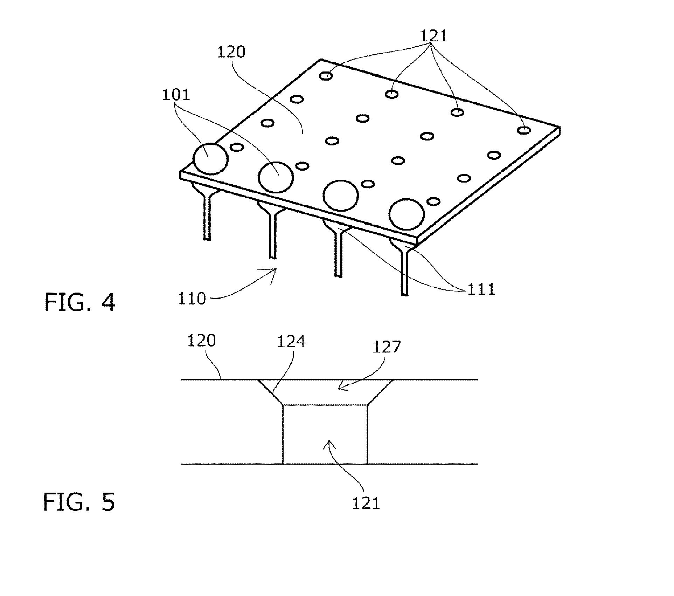

As shown in FIG. 4, the culturing panel 120 is provided with a plurality of the holding holes 121 and, as described above, a predetermined type of the culturing panel 120 having the number of the holding holes 121 and intervals between the holding holes 121 which corresponds to the spread of the stem or the leaf of the plant 101 is prepared, and an operation of transplanting the plant 101 in the culturing pot 102 into the different culturing panels 120 is performed in accordance with the growth of the plant 101.

### First Embodiment

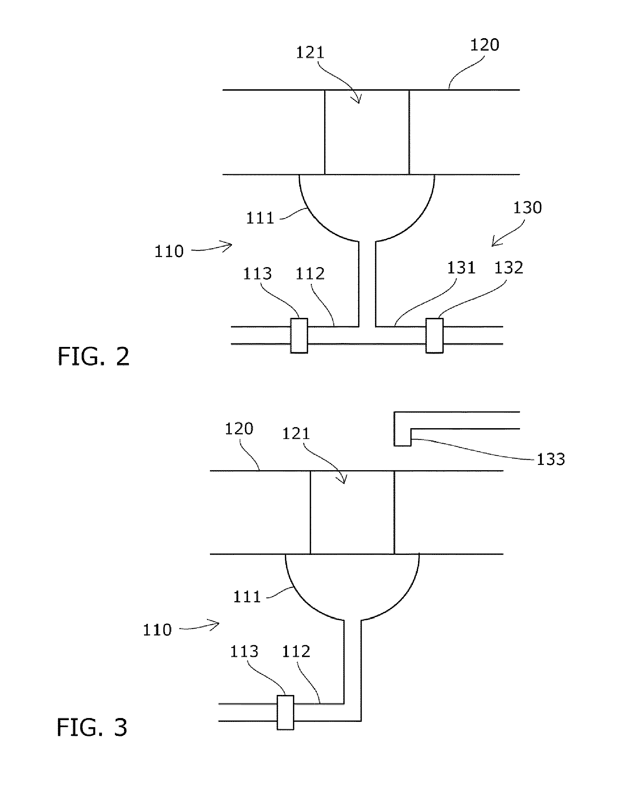

A plant transplantation device according to a first embodiment of the present invention will be described based on FIG. 2.

The plant transplantation device according to the present embodiment has a suctioning means 110 for sucking the root of the plant and causing the root thereof to pass through the holding hole 121 of the culturing panel 120 as the hole portion, and a water supplying means 130 for supplying water to the root of the plant.

The suctioning means 110 has a suctioning tube 111 which can be hermetically attached to the lower portion of the holding hole 121, and a suction pipe 112 which causes a negative pressure in the suctioning tube 111, and a valve 113 for performing ON/OFF of the suction is disposed in the suction pipe 112.

The water supplying means 130 has a water supply pipe 131 which supplies water to the hole portion from the suctioning tube 111, and a valve 132 for performing ON/OFF of the water supply is disposed in the water supply pipe 131.

The suction and the water supply are not performed simultaneously, and hence in the present embodiment the suction pipe 112 and the water supply pipe 131 are formed into one pipe on the downstream sides of the valves 113 and 132 and the pipe is coupled to the suctioning tube 111.

Note that each of a negative pressure generation source of the suction pipe 112 and a water supply source of the water supply pipe 131 which are not shown in the drawing may have any configuration.

In addition, although the depiction of various mechanisms for performing the transplantation operation such as a handling mechanism for gripping and moving the plant, a mechanism for moving and positioning the culturing panel 120, and a mechanism for moving the suctioning tube 111 close to or away from the lower portion of the culturing panel 120 is omitted, these mechanisms may have any configuration, and these mechanisms may be configured such that a part or all of the operations of these mechanisms are manually performed by an operator.

### Second Embodiment

A plant transplantation device according to a second embodiment of the present invention will be described based on FIG. 3.

The plant transplantation device according to the present embodiment is the same as that of the first embodiment described above except the water supplying means 130.

The water supplying means 130 has a water discharge nozzle 133 which supplies water to the holding hole 121 from above.

Each of the negative pressure generation source of the suction pipe 112 and the water supply source of the water discharge nozzle 133 which are not shown in the drawing may have any configuration, the water supply from the water discharge nozzle 133 may be configured to be turned ON/OFF using a valve or the like on an as needed basis, and water may be constantly supplied from the water supply source.

In addition, the water supplying means 130 may further have the water supply pipe 131 similar to that in the first embodiment which supplies water to the hole portion from the suctioning tube 111.

Note that various mechanisms for performing the transplantation operation which are not shown may have any configuration similarly to the first embodiment, and these mechanisms may be configured such that a part or all of the operations of these mechanisms are manually performed by the operator.

### Third Embodiment

A plant transplantation device according to a third embodiment of the present invention will be described based on FIG. 4.

In the plant transplantation device according to the present embodiment, the suctioning tubes 111 are provided in correspondence to the holding holes 121 of one row of the culturing panel 120 in which a plurality of the holding holes 121 are provided.

In addition, the water supplying means 130 (not shown in FIG. 4) are also provided in correspondence to the holding holes 121 of one row.

The configuration of the water supplying means 130 may have one of the configuration of the first embodiment described above and the configuration of the second embodiment described above, may have both thereof, and may have other configurations as long as the water supplying means 130 can supply water to the holding holes 121 of one row.

### Fourth Embodiment

The shape of a culturing panel according to a fourth embodiment of the present invention will be described based on FIG. 5.

In the culturing panel 120 according to the present embodiment, a funnel-shaped portion 124 is formed in the holding hole 121 on the upper surface side of the culturing panel 120, and the internal space of the funnel-shaped portion 124 functions as a storage portion 127 which stores water.

The depth of the funnel-shaped portion 124 may be any depth as long as the holding hole 121 can hold the culturing pot 102 (not shown in FIG. 5) stably, and an inclination angle thereof may be set to any optimum inclination angle in accordance with the plant to be used.

Further, the shape of the funnel-shaped portion 124 may have any curve instead of having a straightly inclined shape.

### Fifth Embodiment

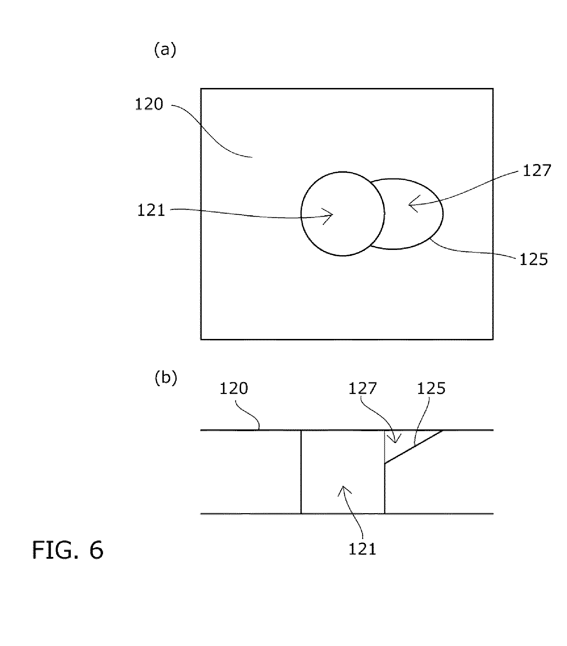

The shape of a culturing panel according to a fifth embodiment of the present invention will be described based on FIG. 6.

The culturing panel 120 according to the present embodiment has an inclined groove 125 formed to extend to the outer peripheral side in one direction so as to be coupled to the peripheral edge portion of the holding hole 121 on the upper surface side of the culturing panel 120, and the internal space of the inclined groove 125 functions as the storage portion 127 which stores water.

The depth of the inclined groove 125 may be any depth as long as the holding hole 121 can hold the culturing pot 102 (not shown in FIG. 5) stably, and the shape, length, or inclination angle thereof may be set to any optimum shape, length, or inclination angle in accordance with the plant to be used.

In addition, the inclined groove 125 may also be formed to extend in two directions in consideration of a movement direction when the plant is transplanted, and the shapes, lengths, or inclination angles of the inclined groove 125 extending in two directions may be different from each other.

### Sixth Embodiment

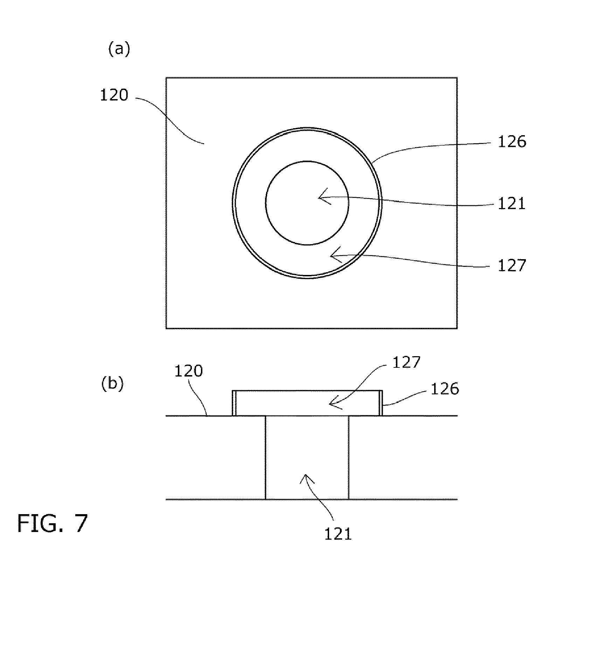

The shape of a culturing panel according to a sixth embodiment of the present invention will be described based on FIG. 7.

In the culturing panel 120 according to the present embodiment, a water storage wall 126 is provided so as to stand on the outer peripheral side of the peripheral edge portion of the holding hole 121 on the upper surface side of the culturing panel 120 and have a diameter larger than that of the peripheral edge portion of the holding hole 121, and the inner peripheral space of the water storage wall 126 functions as the storage portion 127 which stores water.

The diameter and height of the water storage wall 126 can be set to any optimum values in accordance with the plant to be used.

In addition, the shape of the water storage wall 126 may be a shape in which a diameter is changed in a circumferential direction or a polygonal shape instead of the circular shape shown in the drawing in consideration of the movement direction when the plant is transplanted.

Further, in the culturing panel 120, two or more out of the funnel-shaped portion 124 in the fourth embodiment, the inclined groove 125 in the fifth embodiment, and the water storage wall 126 in the sixth embodiment may be provided in combination with each other, and the culturing panel 120 may have another configuration in another shape as long as the configuration forms the storage portion 127 which stores water.

According to each of the embodiments of the thus configured plant transplantation device and the thus configured culturing panel of the present invention, it is possible to reliably suck the root of the plant into the hole portion, reliably cause the root of the plant to extend downward from the hole portion without remaining in the hole portion, and improve the production efficiency without requiring monitoring or manual operations for the insertion of the root with the simple configuration.

Note that the holding hole 121 of the culturing panel 120 is used as the hole portion in each of the above-described embodiments, but the culturing pot itself may be used as the hole portion, and the plant 101 may be transplanted into the different culturing pots 102.

## Claims

1. A plant transplantation device comprising:
a suctioning means for sucking a root of a plant and causing the root of the plant to pass through a hole portion, wherein
the suctioning means has a suctioning tube which can be hermetically attached to a lower portion of the hole portion and a suction pipe which causes a negative pressure in the suctioning tube, and
a water supplying means for supplying water to the root of the plant is provided in a vicinity of the hole portion.

2. The plant transplantation device according to claim 1, wherein
the water supplying means is configured to supply water from the suctioning tube to the hole portion via a water supply pipe.

3. The plant transplantation device according to claim 1 or 2, wherein
the water supplying means has a water discharge nozzle which supplies water to the hole portion from above.

4. The plant transplantation device according to any one of claims 1 to 3, wherein
a plurality of suctioning tubes are provided in correspondence to a plurality of hole portions, and
a plurality of water supplying means are provided in correspondence to the plurality of the suctioning tubes.

5. A culturing panel in which a plurality of holding holes vertically passing through the culturing panel are provided and the plant transplantation device according to any one of claims 1 to 4 is used, with each of the holding holes being used as a hole portion, wherein
a storage portion which stores water is formed on an upper surface side of the holding hole.

6. The culturing panel according to claim 5, wherein
the storage portion is formed in use of a funnel-shaped portion formed in a peripheral edge portion on the upper surface side of the holding hole.

7. The culturing panel according to claim 5 or 6, wherein
the storage portion is formed in use of at least one inclined groove formed so as to be coupled to the peripheral edge portion of the holding hole on the upper surface side of the holding hole and extend to an outer peripheral side.

8. The culturing panel according to any one of claims 5 to 7, wherein
the storage portion is formed in use of a water storage wall provided so as to stand on the outer peripheral side of the peripheral edge portion on the upper surface side of the holding hole and have a diameter larger than that of the peripheral edge portion of the holding hole.
